# EUROPÄISCHE PATENTSCHRIFT

(11) **EP 2 543 891 B1**
(45) Veröffentlichungstag und Bekanntmachung des Hinweises auf die Patenterteilung: **27.12.2017**
(21) Anmeldenummer: 12004609.9
(22) Anmeldetag: 20.06.2012
(51) Int. Cl.: F15B 11/12, F16H 61/30, F16H 63/34

(54) **Kombination einer hydraulischen Betätigungsvorrichtung, eines Steuergerätes und eines oder mehrerer, mittels der Betätigungsvorrichtung betätigbarer Stellglieder für ein Kraftfahrzeuggetriebe**
Combination of a hydraulic actuation device, a controller and one or more positioning members actuated by the hydraulic actuation device for a motor vehicle transmission
Combinaison d'un dispositif d'actionnement hydraulique, d'un appareil de commande et d'un ou plusieurs actionneurs commandés par le dispositif d'actionnement hydraulique pour une boîte de vitesses de véhicule automobile

(30) Priorität: 06.07.2011 DE 102011107263
(43) Veröffentlichungstag der Anmeldung: 09.01.2013
(73) Patentinhaber: FTE automotive GmbH, 96106 Ebern (DE)
(72) Erfinder: Heubner, Wilhelm, 96274 Itzgrund (DE); Lenke, Sonja, 96052 Bamberg (DE)
(74) Vertreter: Oppermann, Mark

(56) Entgegenhaltungen:
- AT-U1- 8 987
- DE-A1- 19 900 852
- DE-A1-102008 011 898
- DE-T2- 60 124 444

## Beschreibung

### TECHNISCHES GEBIET

Die vorliegende Erfindung bezieht sich auf eine Kombination einer hydraulischen Betätigungsvorrichtung, eines Steuergeräts und eines oder mehrerer, mittels der Betätigungsvorrichtung betätigbarer Stellglieder, wie z.B. Getriebeschaltelemente für ein Kraftfahrzeuggetriebe, wie sie in modernen Kraftfahrzeugen massenweise zum Einsatz kommen.

### STAND DER TECHNIK

Bei den erwähnten Getriebeschaltelementen, die in automatisierten Schaltgetrieben (ASG), Doppel- oder Mehrkupplungsgetrieben (DKG) sowie trennbaren Verteiler- und Differentialgetrieben Anwendung finden, handelt es sich in der Regel um Schaltgabeln und Schaltmuffen mit oder ohne Synchronisiereinrichtung. Die Betätigung dieser Bauteile erfolgt entweder elektromechanisch oder hydraulisch, wobei die hydraulische Betätigung aufgrund der hohen Leistungsdichte der Aktuatoren Vorteile hinsichtlich der räumlichen Anordnung im Getriebe bietet. So können die Schaltgabeln bzw. Schaltmuffen direkt betätigt werden, und zusätzliche Reibungsverluste durch mechanische Getriebe od.dgl. werden vermieden. Die Anordnung im Getriebe bietet auch Bauraumvorteile gegenüber elektromechanischen Betätigungen, die oft aus der Silhouette des Getriebes herausragen und damit den Einbau des Getriebes im Kraftfahrzeug erschweren.

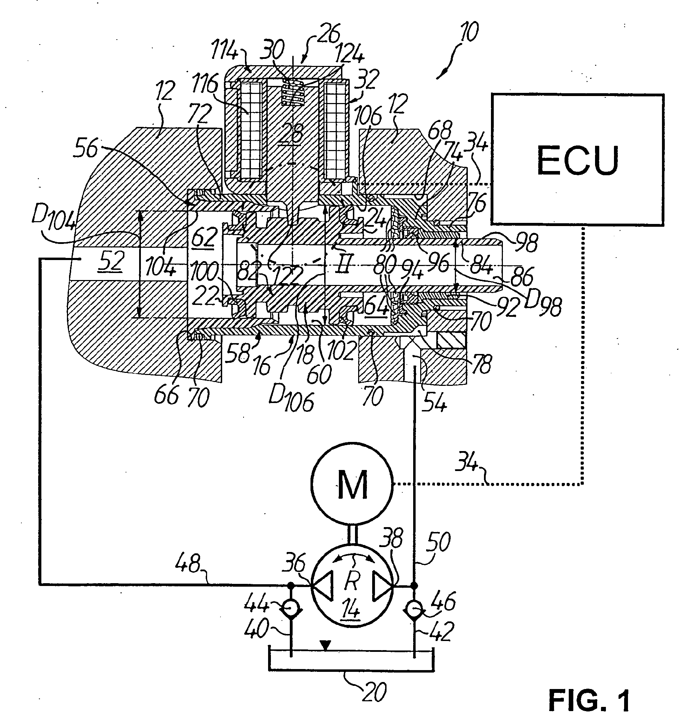

Bekannte hydraulische Betätigungsvorrichtungen (siehe z.B. DE-A-43 09 901, Fig. 1; DE-A-196 37 001, Fig. 27; DE-A-199 50 443, Fig. 11F) bestehen in der Regel aus einer Druckerzeugungs- bzw.

Pumpen- und Speichereinheit (sogenanntes "Powerpack"), einem Ventilblock mit mehreren elektromagnetisch betätigbaren Ventilen zur Verteilung der hydraulischen Energie auf die einzelnen Aktuatoren, Leitungen zur Ölführung sowie den Aktuatoren bzw. Zylindern selbst, ggf. mit integrierter Sensorik zur Lagebestimmung der Schaltelemente. Die Ansteuerung der hydraulischen Bestätigungsvorrichtung in einem Kraftfahrzeuggetriebe erfolgt meist über ein Getriebesteuergerät oder einen übergeordneten Fahrzeugrechner.

Ein Nachteil derartiger hydraulischer Betätigungsvorrichtungen mit Speicher besteht darin, dass das Druckmittel, d.h. die Hydraulikflüssigkeit bei der Speicherladung auf ein Druckniveau weit oberhalb des in den Aktuatoren maximal benötigten Drucks gepumpt werden muss, um nach Entnahme der benötigten Menge noch den erforderlichen Arbeitsdruck bieten zu können, was energetisch ungünstig ist und den Wirkungsgrad der Vorrichtung beträchtlich mindert. Ferner erfordern die überwiegend als Schieberventile ausgeführten Magnetventile aufgrund der engen Spalte eine hohe Ölreinheit und bedingen oftmals Filtermaßnahmen. Dennoch haben die verwendeten Schieberventile eine nicht unerhebliche Leckage, die über eine entsprechende Standzeit zu einer vollständigen Entladung des Speichers führt, was eine Verzögerung der ersten Betätigung um die Speicherladezeit zur Folge hat. Auch beim Fahren ohne Gangwechsel, beispielsweise auf der Autobahn, ist daher ein Nachladen des Speichers in regelmäßigen Zeitabständen erforderlich, was ebenfalls energetisch ungünstig ist. Schließlich nimmt der Ventilblock mit den Magnetventilen einen beträchtlichen Bauraum im Getriebe ein und stellt den größten Kostenfaktor innerhalb der beschriebenen Betätigungsvorrichtung dar.

Aus der EP-A-0 786 052 (Fig. 1) ist eine hydraulische Betätigungsvorrichtung für die Betätigung eines Getriebeschaltelements (Schaltgabel) in einem Kraftfahrzeuggetriebe bekannt, umfassend eine einen elektrischen Pumpenantrieb aufweisende Pumpe, deren Pumprichtung umkehrbar ist (sogenannte Reversierpumpe), eine hydraulisch an die Pumpe angeschlossene, doppeltwirkende Kolben-Zylinder-Anordnung, deren Kolben mit dem Getriebeschaltelement in Wirkverbindung steht, und einen Vorratsbehälter für Hydraulikfluid, aus dem das Hydraulikfluid mittels der Pumpe zur Kolben-Zylinder-Anordnung förderbar ist, um deren Kolben für eine Bewegung des Getriebeschaltelements je nach Pumprichtung auf der einen oder der anderen Seite des Kolbens hydraulisch zu beaufschlagen.

Wenngleich bei dieser hydraulischen Betätigungsvorrichtung zur Vermeidung elektrisch betriebener Ventile ein Ventilmechanismus mit ausschließlich hydraulischer Ansteuerung vorgesehen ist, der in einer in der Kolben-Zylinder-Anordnung angefahrenen Kolben(end)stellung für einen Druckausgleich am Kolben sorgt, um das Getriebeschaltelement (Schaltgabel) kräftemäßig zu entlasten, kann auch bei diesem Stand der Technik der Aufwand als hoch bezeichnet werden. Denn für jede einem Getriebeschaltelement zugeordnete Kolben-Zylinder-Anordnung wird eine eigene Pumpe benötigt. Außerdem muss die/jede Pumpe geeignet gesteuert werden, damit die Kolben-Zylinder-Anordnung auch eine (neutrale) Mittenstellung anfahren kann.

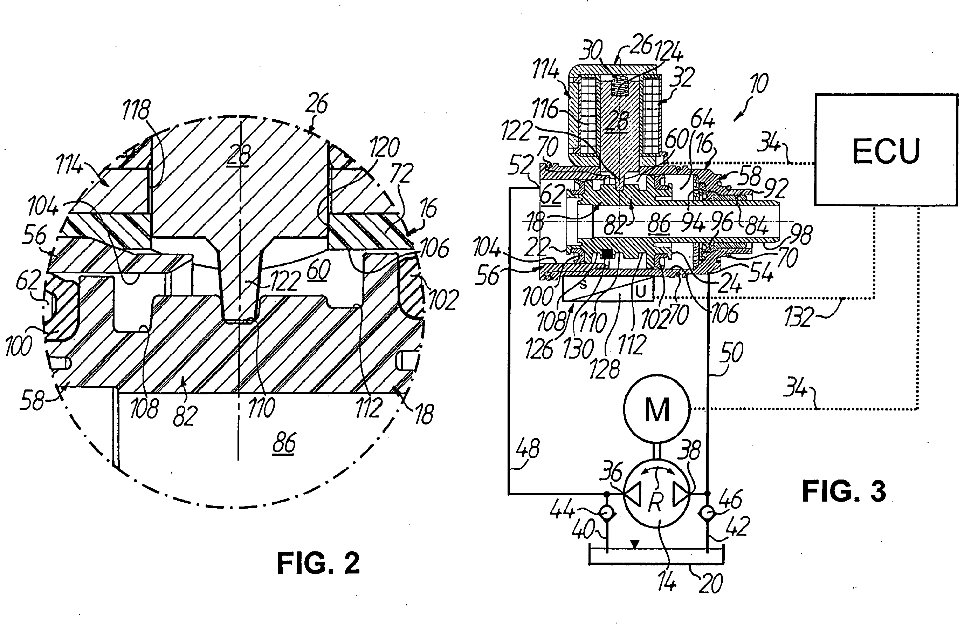

Des Weiteren offenbart die DE-T-601 24 444 (Fig. 2 & 3) eine Vorrichtung zur hydraulischen Steuerung von Gangschaltungen eines Schaltgetriebes, die einerseits einen Betätigungszylinder, der auf das bewegliche Element einer Kupplung einwirken kann, und andererseits eine Betätigungseinheit aufweist, die dem Schaltgetriebe zugeordnet ist und dazu dient, dessen Gänge zu ändern, wobei der Betätigungszylinder und die Betätigungseinheit über eine hydraulische Steuereinheit wahlweise hydraulisch ansteuerbar sind. Hierzu hat die hydraulische Steuereinheit einen hydraulischen Schubzylinder, dessen Kolben über ein elektromotorisch angetriebenes Schraube-Mutter-System verschiebbar ist und auf ein und derselben Seite zwei Kammern begrenzt, von denen die eine Kammer mit dem Betätigungszylinder für die Kupplung und die andere Kammer mit der Betätigungseinheit für das Schaltgetriebe verbunden ist. Dabei dienen Magnetventil- und Bypass-Elemente zur Drucksteuerung. Die Betätigungseinheit für das Schaltgetriebe weist Gangeinlege- bzw. -auswahlachsen auf, von denen jede Achse bzw. Stange mit Hilfe von zwei auf gegenüberliegenden Seiten angeordneten Betätigungszylindern verschiebbar ist. Zwischen den Betätigungszylindern ist jede Achse ferner mit seitlichen Kerben versehen, in die ein von einem Elektromagneten betätigter Verriegelungsfinger selektiv eingreifen kann, um die entsprechende Achse in ihrer jeweiligen Schaltposition zu halten.

Ferner ist aus der DE-A-10 2008 011 898 (Fig. 1 & 2) eine Schaltvorrichtung eines Kraftfahrzeugs, insbesondere Parksperrschaltvorrichtung bekannt, mit wenigstens einer hydraulischen Schalteinheit, die auf eine von einer Brennkraftmaschine getrennt ausgebildete, namentlich elektrische Antriebseinheit ausgelegt ist, welche dazu dient, eine Antriebsleistung für eine Pumpe bereitzustellen, die zur Erzeugung eines für einen Schaltvorgang der Schalteinheit erforderlichen Schaltdrucks benötigt wird. Die Pumpe ist hierbei über eine Ventilanordnung hydraulisch an einen doppelwirkenden hydraulischen Aktuator der Schalteinheit angeschlossen, der in einem Aktuatorzylindergehäuse zwei in axialer Richtung beabstandete Kolben aufweist, die an einer gemeinsamen Kolbenstange befestigt und räumlich durch eine feststehende Zylinderzwischenwand getrennt sind. Die Schalteinheit umfasst ferner eine Verriegelungseinheit mit zwei Verriegelungspositionen, die zwei Schaltstellungen entsprechen, wobei die Verriegelungseinheit einen von einem Elektromagneten gebildeten Hubschieber aufweist, der zur Fixierung der Kolbenstange in den Verriegelungspositionen in Ausnehmungen der Kolbenstange eingreift, die an deren aus dem Aktuatorzylindergehäuse vorstehenden Ende vorgesehen sind.

Schließlich offenbart die AT-U-008 987 (Fig. 1 & 2) ein Hydrauliksystem für die Steuerung zweier Aktuatoren in einem Getriebe, das eine einzige umsteuerbare Pumpeneinheit mit einem ersten und einem zweiten Anschluss hat, die je nach Förderrichtung der Pumpe Saug- oder Druckanschluss sind. Beide Anschlüsse stehen über ein Rückschlagventil mit einem Reservoir und über Druckleitungen mit einem ersten Nehmerzylinder zur Gangstellung (erster Aktuator) in Verbindung. Um beide Aktuatoren abgestimmt zu betätigen, ist im ersten Nehmerzylinder mittig eine Steueröffnung ausgebildet, die über ein drittes Rückschlagventil und eine dritte Druckleitung mit einem zweiten Nehmerzylinder zur Kupplungsbetätigung (zweiter Aktuator) verbindbar ist, wobei zudem ein Ablassventil vorgesehen ist, über das die dritte Druckleitung mit dem Reservoir verbunden werden kann und welches auf gegenüberliegenden Ansteuerseiten mit der ersten und zweiten Druckleitung in Verbindung steht. Der erste Nehmerzylinder zur Gangstellung hat ferner einen in einem Zylindergehäuse aufgenommenen Kolben, der je nach Förderrichtung der Pumpe auf der einen oder anderen Seite druckbeaufschlagbar ist, um eine mit dem Kolben fest verbundene Schaltstange zu verschieben, die an einem zylindergehäusefernen Ende eine Schaltgabel trägt. Die Schaltstange ist nahe der Schaltgabel mit einer federvorgespannten Rastierung versehen, welche die Schaltstange in einer der beiden möglichen Schaltstellungen verrastet.

### AUFGABENSTELLUNG

Der Erfindung liegt die Aufgabe zugrunde, für die Betätigung eines oder mehrerer Stellglieder in insbesondere einem Kraftfahrzeuggetriebe eine hydraulische Betätigungsvorrichtung bereitzustellen, welche die obigen Nachteile vermeidet und gegenüber dem geschilderten Stand der Technik vor allem einen deutlich verbesserten Gesamtwirkungsgrad bei geringeren Kosten aufweist.

### DARSTELLUNG DER ERFINDUNG

Diese Aufgabe wird durch die im Patentanspruch 1 angegebenen Merkmale gelöst. Vorteilhafte bzw. zweckmäßige Weiterbildungen der Erfindung sind Gegenstand der Patentansprüche 2 bis 8.

Erfindungsgemäß umfasst bei einer Kombination einer hydraulischen Betätigungsvorrichtung, eines Steuergeräts und eines oder mehrerer, mittels der Betätigungsvorrichtung betätigbarer Stellglieder für ein Kraftfahrzeuggetriebe die hydraulische Betätigungsvorrichtung eine einen elektrischen Pumpenantrieb aufweisende Pumpe, deren Pumprichtung umkehrbar ist, wenigstens eine hydraulisch an die Pumpe angeschlossene, doppeltwirkende Kolben-Zylinder-Anordnung, deren Kolben eine erste Wirkfläche auf der einen Seite und eine zweite Wirkfläche auf der anderen Seite hat und mit dem Stellglied in Wirkverbindung steht, und einen Vorratsbehälter für Hydraulikfluid, aus dem das Hydraulikfluid mittels der Pumpe zur Kolben-Zylinder-Anordnung förderbar ist, um deren Kolben für eine Bewegung des Stellglieds je nach Pumprichtung auf der ersten Wirkfläche oder der zweiten Wirkfläche hydraulisch zu beaufschlagen, wobei an der bzw. jeder Kolben-Zylinder-Anordnung eine Rastiereinrichtung angebracht ist, die ein mit Sperrabschnitten am Kolben zusammenwirkendes Sperrelement aufweist, das in eine eine Bewegung des Stellglieds verhindernde Sperrstellung federvorgespannt ist und welches mittels eines elektrisch ansteuerbaren Aktuators von der Sperrstellung gegen die Federvorspannung in eine eine Bewegung des Stellglieds zulassende Lösestellung bewegbar ist, und wobei der Pumpenantrieb und der Aktuator mit dem Steuergerät elektrisch verbunden sind, welches die elektrische Ansteuerung von Pumpenantrieb und Aktuator koordiniert.

Die Koordinierung von Pumpenantrieb und Aktuator kann hierbei vermittels des Steuergeräts so erfolgen, dass zunächst der Aktuator der (jeweiligen) Rastiereinrichtung elektrisch angesteuert wird, um das Sperrelement aus seiner eine Bewegung des Stellglieds stromlos verhindernden Sperrstellung in seine Lösestellung zu bringen, so dass die durch die Rastiereinrichtung bewirkte Verrastung oder Sperrung des Stellglieds aufgehoben wird. Sodann steuert das Steuergerät den Pumpenantrieb elektrisch an, um die Reversierpumpe mit der gewünschten Pumprichtung zu starten, worauf der auf die entsprechende hydraulische Wirkfläche des Kolbens der Kolben-Zylinder-Anordnung einwirkende Hydraulikdruck eine Bewegung des Stellglieds in vorbestimmter Richtung erzeugt. Sobald nun das Stellglied die gewünschte Position erreicht hat - was beispielsweise über einen Wegsensor an der Kolben-Zylinder-Anordnung erfasst werden kann - werden durch das Steuergerät die Bestromung des Aktuators der Rastiereinrichtung beendet und der Pumpenantrieb ausgeschaltet. Hierauf kehrt das Sperrelement aufgrund der Federvorspannung in seine eine Bewegung des Stellglieds verhindernde Sperrstellung zurück.

Als Alternative hierzu können Pumpenantrieb und Aktuator(en) der Rastiereinrichtung(en) mittels des Steuergeräts auch so koordiniert betrieben werden, dass zunächst der entsprechende Aktuator elektrisch angesteuert wird, um die Verrastung des Stellglieds durch Zurückziehen des Sperrelements aufzuheben, sodann die Pumpe mit definierter Pumprichtung betrieben wird, um eine Bewegung des Stellglieds in vorbestimmter Richtung einzuleiten, und kurz darauf der Aktuator wieder stromlos geschaltet wird, so dass das federvorgespannte Sperrelement automatisch in seine Sperrstellung gelangt / eine Verrastung erfolgt sobald dies infolge der Relativlage der beteiligten Bauteile (Sperrelement/Stellglied) wieder möglich ist, worauf die Pumpe ausgeschaltet wird. Irgendeine Sensierung der Kolbenposition od.dgl. ist bei dieser Alternative nicht notwendig.

Es ist ersichtlich, dass die vorgeschlagene hydraulische Betätigungsvorrichtung bei im Verhältnis geringem vorrichtungstechnischen Aufwand, und damit schon geringen Kosten, energetisch sehr günstig arbeitet, denn eine Bestromung der elektrischen Bauteile muss erst und nur dann erfolgen, wenn eine Bewegung des (jeweiligen) Stellglieds erforderlich ist. Irgendwelche Speicher oder Schieberventile - und damit eine erhöhte Ölreinheit - sind hierbei ebenso wenig erforderlich wie eine komplizierte Pumpensteuerung. Weil darüber hinaus immer zwei Elemente - Pumpenantrieb und Aktuator der (jeweiligen) Rastiereinrichtung - angesteuert werden müssen, um eine Bewegung einzuleiten, ist vorteilhaft die Sicherheit gegen Fehlbetätigungen erhöht. Die Koordinierung der elektrischen Ansteuerung von Pumpenantrieb und Aktuator der (jeweiligen) Rastiereinrichtung über das Steuergerät ermöglicht es schließlich in ebenfalls vorteilhafter Weise, dass weitere Stellglieder mit jeweils zugeordneter Kolben-Zylinder-Anordnung mit nur einer Pumpe hydraulisch angesteuert werden können, wobei diejenigen Stellglieder, die sich nicht bewegen sollen, stromlos durch die jeweilige Rastiereinrichtung, d.h. deren Sperrelement gehalten sind.

Da die Rastiereinrichtung an der Kolben-Zylinder-Anordnung angebracht ist, wobei das Sperrelement mit Sperrabschnitten am Kolben zusammenwirkt, wird baulicher Aufwand und Bauraum an dem Stellglied, z.B. einer Schaltmuffe gespart, wo der Platz oft sehr knapp bemessen ist.

Hierbei können die Sperrabschnitte am Kolben durch axial voneinander beabstandete Radialnuten am Kolbenumfang ausgebildet sein. Dies ist nicht nur in fertigungstechnischer Hinsicht vorteilhaft, da solche Radialnuten einfach am Kolben ausgeformt werden können, sondern auch deshalb, weil der Kolben nicht gegen ein Verdrehen gesichert werden muss.

In einer ersten Alternative kann der Kolben der (bzw. wenigstens einer der) Kolben-Zylinder-Anordnung(en) auf seinen hydraulisch beaufschlagbaren Seiten mit Wirkflächen gleicher Größe versehen sein, die jeweils einen Druckraum der (entsprechenden) Kolben-Zylinder-Anordnung begrenzen. Bei dieser Alternative ist die Volumenbilanz an der (jeweiligen) Kolben-Zylinder-Anordnung ausgeglichen, d.h. bei einer Verschiebung des Kolbens, die durch Hineinfördern eines bestimmten Hydraulikfluidvolumens in einen der Druckräume bewirkt wird, verdrängt der Kolben in dem anderen Druckraum das gleiche Hydraulikfluidvolumen. Daher müssen keine Vorkehrungen getroffen werden, die ein Nachsaugen von Hydraulikfluid aus dem Vorratsbehälter ermöglichen, um Volumendifferenzen auszugleichen.

In einer zweiten Alternative hingegen kann der Kolben der (bzw. wenigstens einer der) Kolben-Zylinder-Anordnung(en) auf seinen hydraulisch beaufschlagbaren Seiten Wirkflächen unterschiedlicher Größe aufweisen, die jeweils einen Druckraum der (entsprechenden) Kolben-Zylinder-Anordnung begrenzen, wobei zwischen der Reversierpumpe und der (jeweiligen) Kolben-Zylinder-Anordnung eine - energetisch sehr günstig - mittels des Pumpendrucks hydraulisch ansteuerbare Ventilanordnung vorgesehen ist, die bei einer Verschiebung des Kolbens für einen Ausgleich der Volumendifferenz zwischen den Druckräumen sorgt. Diese Ausgestaltung bietet sich an, wenn die Kolben-Zylinder-Anordnung besonders kurz bauen soll. So wird für den Kolben, von dessen einer Seite sich die Kolben und Stellglied in der Regel wirkverbindende Kolbenstange wegerstreckt, um deren Querschnitt die entsprechende hydraulische Wirkfläche des Kolbens reduziert ist, nur eine Zylinderlauffläche konstanten Durchmessers benötigt, während bei der oben angesprochenen ersten Alternative die Zylinderlauffläche in der Regel aus zwei Abschnitten unterschiedlichen Durchmessers besteht - also zwei Hublängen umfasst - um zur Erzielung flächengleicher Wirkflächen am Kolben den Querschnitt der Kolbenstange "flächenmäßig" zu kompensieren.

Wird für besagte Koordinierung der elektrischen Ansteuerung von Pumpenantrieb und Aktuator und/oder andere Zwecke eine Weginformation benötigt, so kann die (jeweilige) Kolben-Zylinder-Anordnung eine Sensoreinrichtung zur Erfassung der Kolbenposition aufweisen, vorzugsweise mit einem am Zylindergehäuse angeordneten Sensor und einem am Kolben befestigten Signalelement. Alternativ dazu kann eine solche Sensoreinrichtung aber auch am Stellglied vorgesehen werden.

Darüber hinaus kann vorgesehen sein, dass es sich bei dem elektrisch ansteuerbaren Aktuator um einen elektromagnetischen Aktuator handelt, wobei mittels des Steuergeräts die Induktivität des Aktuators erfassbar ist, um die Stellung des Sperrelements zu ermitteln. Somit kann auf denkbar einfache Art und Weise einen Positionsinformation zum (jeweiligen) Sperrelement gewonnen werden. Hierbei können die vorerwähnten Radialnuten am Kolbenumfang vorteilhaft eine unterschiedliche Nuttiefe besitzen, so dass durch Erfassung der Induktivität des elektromagnetischen Aktuators über das Steuergerät auch die axiale Lage des Kolbens im Zylindergehäuse ermittelbar ist.

Im weiteren Verfolg des Erfindungsgedankens kann schließlich, wenn mehrere Stellglieder - wie die Schaltgabeln oder -muffen in einem mehrgängigen automatisierten Schaltgetriebe (ASG) für Kraftfahrzeuge - zu betätigen sind, eine Mehrzahl von doppeltwirkenden Kolben-Zylinder-Anordnungen vorgesehen sein, deren Kolben mit jeweils einem Stellglied in Wirkverbindung stehen, wobei die Kolben-Zylinder-Anordnungen bezüglich der vorteilhaft nur einen Pumpe hydraulisch parallel geschaltet sind.

### KURZE BESCHREIBUNG DER ZEICHNUNGEN

Im Folgenden wird die Erfindung anhand bevorzugter Ausführungsbeispiele unter Bezugnahme auf die beigefügten, teilweise schematischen Zeichnungen näher erläutert, in denen gleiche Bezugszeichen gleiche bzw. entsprechende Teile kennzeichnen und elastomere Teile zur Vereinfachung der Darstellung zumeist im unverformten Zustand gezeigt sind. In den Zeichnungen zeigen:
- Fig. 1: ein Schaltbild einer hydraulischen Betätigungsvorrichtung für die Betätigung eines Stellglieds in einem Kraftfahrzeuggetriebe, mit nur einer Kolben-Zylinder-Anordnung, die mit einer Rastiereinrichtung versehen im Getriebegehäuse integriert ist, als ein erstes erfindungsgemäßes Ausführungsbeispiel;
- Fig. 2: eine vergrößerte Darstellung des Details II in Fig. 1, das veranschaulicht, wie ein Sperrelement der Rastiereinrichtung mit Sperrabschnitten am Kolben der Kolben-Zylinder-Anordnung zusammenwirkt, die am Kolbenumfang durch axial voneinander beabstandete Radialnuten mit unterschiedlicher Nuttiefe ausgebildet sind;
- Fig. 3: ein Schaltbild einer Variante der hydraulischen Betätigungsvorrichtung nach dem ersten Ausführungsbeispiel, bei der die Radialnuten am Kolbenumfang gleich tief sind und zur Sensierung der Kolbenposition zusätzlich eine Sensoreinrichtung vorgesehen ist;

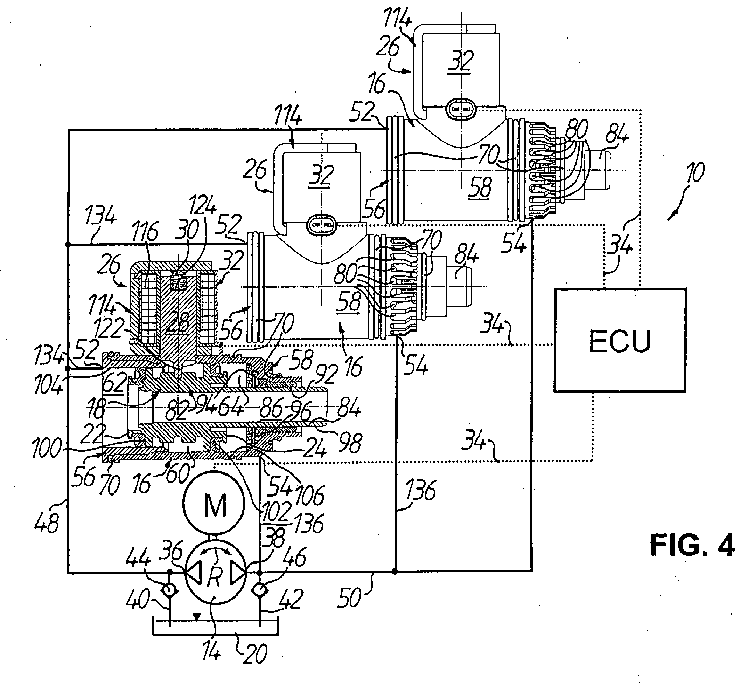

- Fig. 4: ein Schaltbild einer hydraulischen Betätigungsvorrichtung für die Betätigung mehrerer Stellglieder in einem Kraftfahrzeuggetriebe, mit einer entsprechenden Anzahl von Kolben-Zylinder-Anordnungen, die bezüglich der nur einen Pumpe hydraulisch parallel geschaltet sind, als ein zweites erfindungsgemäßes Ausführungsbeispiel;

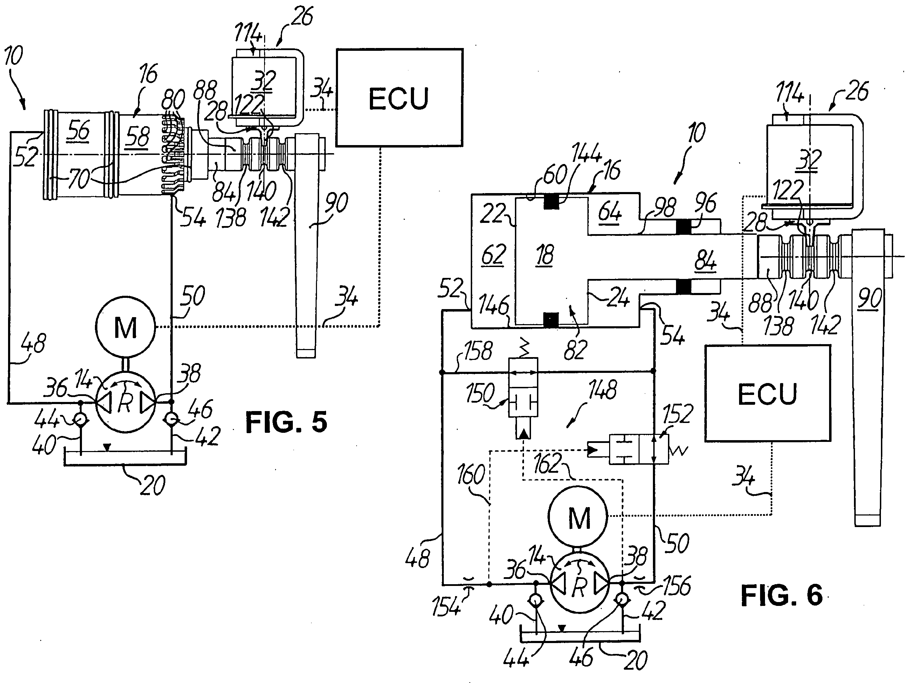

- Fig. 5: ein Schaltbild einer hydraulischen Betätigungsvorrichtung mit nur einer Kolben-Zylinder-Anordnung für die Betätigung eines Stellglieds (Schaltstange mit Schaltgabel) in einem Kraftfahrzeuggetriebe, wobei die Rastiereinrichtung im Gegensatz zu den vorherigen Ausführungsbeispielen am Stellglied vorgesehen ist, nicht gemäß der Erfindung; und
- Fig. 6: ein Schaltbild einer hydraulischen Betätigungsvorrichtung mit nur einer Kolben-Zylinder-Anordnung für die Betätigung eines Kraftfahrzeuggetriebe-Stellglieds (Schaltstange mit Schaltgabel), an dem die Rastiereinrichtung vorgesehen ist, wobei der Kolben der Kolben-Zylinder-Anordnung im Gegensatz zu den vorherigen Ausführungsbeispielen zwei unterschiedlich große Wirkflächen aufweist und zwischen Pumpe und Kolben-Zylinder-Anordnung eine Ventilanordnung geschaltet ist, die bei einer Kolbenverschiebung dem Ausgleich der Volumen-differenz zwischen den Druckräumen der Kolben-Zylinder-Anordnung dient, nicht gemäß der Erfindung.

In den Zeichnungen - und in der folgenden Beschreibung - wurde auf eine nähere Darstellung bzw. Erläuterung der zu betätigenden Stellglieder verzichtet, weil diese Elemente und deren Funktion dem Fachmann hinreichend bekannt sind und diesbezügliche Ausführungen für das Verständnis der vorliegenden Erfindung nicht erforderlich erscheinen.

### DETAILLIERTE BESCHREIBUNG DER AUSFÜHRUNGSBEISPIELE

In Fig. 1 beziffert das Bezugszeichen 10 allgemein eine hydraulische Betätigungsvorrichtung für die Betätigung eines Stellglieds (hier nicht gezeigt) - z.B. einer Schaltstange mit Schaltgabel oder einer Schaltmuffe - in einem Kraftfahrzeuggetriebe, von dem in Fig. 1 lediglich das ggf. mehrteilige Getriebegehäuse 12 teilweise schematisch dargestellt ist. Wie nachfolgend noch näher beschrieben werden wird umfasst die hydraulische Betätigungsvorrichtung 10 eine einen elektrischen Pumpenantrieb M aufweisende Pumpe 14, deren Pumprichtung (Doppelpfeil R in Fig. 1) umgekehrt werden kann (sog. Reversierpumpe), eine hydraulisch an die Pumpe 14 angeschlossene, doppeltwirkende Kolben-Zylinder-Anordnung 16, deren Kolben 18 mit dem Stellglied in Wirkverbindung steht, und einen Vorratsbehälter 20 für Hydraulikfluid, aus dem das Hydraulikfluid mittels der Pumpe 14 zur Kolben-Zylinder-Anordnung 16 gefördert werden kann, um deren Kolben 18 für eine Bewegung des Stellglieds je nach Pumprichtung R auf der einen (Wirkfläche 22) oder der anderen Seite (Wirkfläche 24) des Kolbens 18 hydraulisch zu beaufschlagen. Wesentlich ist, dass der Kolben-Zylinder-Anordnung 16 eine Rastiereinrichtung 26 mit einem Sperrelement 28 funktional und ggf. auch räumlich zugeordnet ist, das in eine eine Bewegung des Stellglieds verhindernde Sperrstellung (in Fig. 1 dargestellt) federvorgespannt ist - beispielsweise unter Zuhilfenahme einer Schraubendruckfeder 30, wie gezeigt - und welches mittels eines elektrisch ansteuerbaren, vorzugsweise elektromagnetischen Aktuators 32 von der Sperrstellung gegen die Federvorspannung in eine eine Bewegung des Stellglieds zulassende bzw. ermöglichende Lösestellung bewegbar ist. Hierbei sind der Pumpenantrieb M und der Aktuator 32 mit einem Steuergerät ECU elektrisch verbunden (Versorgungskabel 34), welches die elektrische Ansteuerung von Pumpenantrieb M und Aktuator 32 geeignet koordiniert, wie eingangs schon kurz beschrieben.

Die Pumpe 14 weist zwei Hydraulikanschlüsse 36, 38 auf, von denen je nach der gewählten bzw. von dem Steuergerät ECU vorgegebenen Pumprichtung R der eine Anschluss den Pumpeneingang (Sauganschluss), über den das Hydraulikfluid an- bzw. nachgesaugt wird, und der andere Anschluss den Pumpenausgang (Druckanschluss) bildet, über den das Hydraulikfluid mit Druck abgegeben wird. Als Pumpentypen in Frage kommen hier z.B. Zahnradpumpen, Rollenzellenpumpen, Flügelzellenpumpen und Radial- oder Axial-Kolbenpumpen. Für die vorliegende Anwendung ist es ausreichend, wenn die Pumpe 14 als Konstantpumpe ausgeführt ist, die für eine vorbestimmte Drehzahl des Pumpenantriebs M einen konstanten Volumenstrom liefert. Ggf. kann der Pumpenantrieb M in der Drehzahl steuerbar sein, um beispielsweise auf die Stellgeschwindigkeit am Stellglied Einfluss nehmen zu können. Die Bestromung bzw. Ansteuerung des Pumpenantriebs M erfolgt über das in Fig. 1 punktiert eingezeichnete Versorgungskabel 34, welches an das Steuergerät ECU elektrisch angeschlossen ist.

Jeder Hydraulikanschluss 36, 38 der Pumpe 14 ist mit dem Vorratsbehälter 20 über eine Ansaugleitung 40, 42 verbunden, in die ein in Richtung des Vorratsbehälters 20 sperrendes Rückschlagventil 44, 46 geschaltet ist. Die Rückschlagventile 44, 46 können in ihre in Richtung des Vorratsbehälters 20 sperrende Stellung vorgespannt sein; dies ist in den Figuren jedoch nicht gezeigt. Darüber hinaus ist an jeden Hydraulikanschluss 36, 38 eine Druckleitung 48, 50 angeschlossen, die für eine hydraulische Verbindung zur Kolben-Zylinder-Anordnung 16 sorgt. Insoweit ist für den Fachmann ersichtlich, dass, wenn die Pumpe 14 z.B. mit einer Pumprichtung R im Uhrzeigersinn in Fig. 1 betrieben wird, die Pumpe 14 über den Hydraulikanschluss 36 Hydraulikfluid aus der Druckleitung 48 und ggf. über das Rückschlagventil 44 und die Ansaugleitung 40 aus dem Vorratsbehälter 20 ansaugt. Über ihren anderen Hydraulikanschluss 38 fördert die Pumpe 14 indes das Hydraulikfluid mit Druck in die Druckleitung 50. Hierbei verhindert das Rückschlagventil 46 einen Druckabbau bzw. einen Rückfluss des Hydraulikfluids zum Vorratsbehälter 20. In analoger Weise wird die Druckleitung 50 druckentlastet, während die Druckleitung 48 druckbeaufschlagt wird, wenn die Pumpe 14 mit einer Pumprichtung R entgegen dem Uhrzeigersinn in Fig. 1 arbeitet, wobei Hydraulikfluid in Fig. 1 von rechts der Pumpe 14 nach links der Pumpe 14 gefördert bzw. verschoben wird.

Die Druckleitungen 48, 50 führen jeweils zu einem Steuer- oder Druckanschluss 52, 54 der Kolben-Zylinder-Anordnung 16. Die Druckanschlüsse 52, 54 sind in Fig. 1 eher schematisch als Kanäle im Getriebegehäuse 12 dargestellt, welches im gezeigten Ausführungsbeispiel zusammen mit zwei Einsatzteilen 56, 58 einen Zylinderraum 60 der Kolben-Zylinder-Anordnung 16 bildet, in dem der Kolben 18 zwei Druckräume 62, 64 voneinander trennt.

Die vorzugsweise aus einem Kunststoff wie Polyphtalamid (PPA) mit einem vorbestimmten Glasfaseranteil, z.B. 50%, durch Spritzgießen hergestellten Einsatzteile 56, 58 sind eng in zugeordnete Stufenbohrungen 66, 68 des Getriebegehäuses 12 eingesetzt und dabei teleskopartig ineinander gepasst. Bünde, Absätze, Nuten od.dgl. am Außenumfang der Einsatzteile 56, 58 bilden hierbei Aufnahmeabschnitte für O-Ringe 70 aus, die mit den Wandflächen der Stufenbohrungen 66, 68 im Getriebegehäuse 12 zusammenwirken, um die Kolben-Zylinder-Anordnung 16 gegenüber der Umgebung statisch abzudichten. Während das in Fig. 1 linke Einsatzteil 56 im Wesentlichen die Form einer Hülse besitzt und mit seiner linken Stirnseite an einem Absatz der Stufenbohrung 66 im Getriebegehäuse 12 anliegt, ist das in Fig. 1 rechte Einsatzteil 58 im Wesentlichen becherförmig ausgebildet, mit einem Mantelabschnitt 72, einem sich daran in Fig. 1 nach rechts anschließenden Bodenabschnitt 74, mit dem das Einsatzteil 58 einem Absatz der Stufenbohrung 68 im Getriebegehäuse 12 aufsitzt, und einem sich an den Bodenabschnitt 74 in Fig. 1 ebenfalls nach rechts anschließenden, im Wesentlichen hohlzylindrischen Fortsatz 76.

Der in Fig. 1 linke Druckanschluss 52 mündet quasi direkt im Druckraum 62 innerhalb des Einsatzteils 56. Der in Fig. 1 rechte Druckanschluss 54 hingegen mündet in einem Ringraum 78, der den Bodenabschnitt 74 des Einsatzteils 58 umgebend nach außen von dem Getriebegehäuse 12 und nach innen von dem Einsatzteil 58 sowie zu den Seiten von den dazwischen liegenden O-Ringen 70 begrenzt wird. Dieser Ringraum 78 steht über eine Mehrzahl von Durchbrüchen 80 im Bodenabschnitt 74 des Einsatzteils 58, die gleichmäßig über den Umfang des Einsatzteils 58 verteilt sind (vgl. hierzu auch die in Fig. 4 oberen, nicht im Schnitt gezeigten Kolben-Zylinder-Anordnungen 16), mit dem Druckraum 64 in Fluidverbindung.

Bei dem Kolben 18 der Kolben-Zylinder-Anordnung 16 handelt es sich um einen Schaftkolben, der vorzugsweise ebenfalls aus einem Kunststoff wie Polyphtalamid (PPA) mit einem vorbestimmten Glasfaseranteil, z.B. 50%, durch Spritzgießen hergestellt ist, mit einem Kolbenteil 82 und einem Kolbenschaft 84, die mit einer durchgehenden Stufenbohrung 86 versehen sind. Die Stufenbohrung 86 dient in an sich bekannter Weise der hydraulisch dichten sowie axial zug- und druckfesten Aufnahme einer Schaltstange, welche in den Fig. 1 bis 4 nicht dargestellt, in den Fig. 5 und 6 indes mit dem Bezugszeichen 88 versehen ist. Im montierten Zustand der Schaltstange endet diese in Fig. 1 nach links nahe dem oder am Ende des Kolbenteils 82, wo sie den Druckraum 62 hydraulisch dicht verschließt bzw. begrenzt, während sie in Fig. 1 nach rechts über das Ende des Kolbenschafts 84 hinausragt, wobei sie an ihrem vorstehenden Ende z.B. eine Schaltgabel trägt, wie sie in den Fig. 5 und 6 bei 90 gezeigt ist.

Außenumfangsseitig ist der Kolbenschaft 84 verschiebbar in einer Gleitbuchse 92 geführt, die ihrerseits in dem Fortsatz 76 des Einsatzteils 58 befestigt ist. Zwischen der Gleitbuchse 92 und einem am Bodenabschnitt 74 des Einsatzteils 58 angebrachten Haltering 94 ist ein Dichtelement 96, im dargestellten Ausführungsbeispiel ein an sich bekannter Nutring angeordnet, der mit der Außenumfangsfläche 98 des Kolbenschafts 84 zusammenwirkt, um den Druckraum 64 in Fig. 1 nach rechts dynamisch abzudichten.

Der gegenüber dem Kolbenschaft 84 durchmessergrößere Kolbenteil 82 ist außenumfangsseitig an beiden Längsenden mit jeweils einer Radialnut zur Aufnahme jeweils eines Dichtelements 100, 102 - im dargestellten Ausführungsbeispiel erneut an sich bekannte Nutringe - versehen. Dabei wirkt das in Fig. 1 linke Dichtelement 100 mit der Innenumfangsfläche 104 des Einsatzteils 56 zusammen, um den Druckraum 62, der am bzw. im Kolben 18 (auch) von der Schaltstange (hier nicht gezeigt) begrenzt wird, in Fig. 1 nach rechts dynamisch abzudichten. Das in Fig. 1 rechte Dichtelement 102 am Kolbenteil 82 hingegen wirkt mit der Innenumfangsfläche 106 des Mantelabschnitts 72 des Einsatzteils 58 zusammen, um den Druckraum 64 in Fig. 1 nach links dynamisch abzudichten.

In einem drucklosen Bereich des Zylinderraums 60 zwischen den Dichtelementen 100, 102 sind am Kolben 18 mehrere Sperrabschnitte ausgebildet, mit denen das Sperrelement 28 der im dargestellten Ausführungsbeispiel an der Kolben-Zylinder-Anordnung 16 angebrachten Rastiereinrichtung 26 zusammenwirkt, wie nachfolgend noch näher beschrieben werden wird. An dieser Stelle sei nur soviel erwähnt, dass es sich hier bei den kolbenseitigen Sperrabschnitten um axial voneinander beabstandete, umlaufende Radialnuten 108, 110, 112 (siehe Fig. 2) handelt, die am Umfang des Kolbenteils 82 des Kolbens 18 ausgeformt sind.

Bei diesem Ausführungsbeispiel ist der Kolben 18 auf seinen hydraulisch beaufschlagbaren Seiten mit Wirkflächen 22, 24 gleicher Größe versehen, die die Druckräume 62, 64 der Kolben-Zylinder-Anordnung 16 begrenzen. Dies wird über unterschiedliche Durchmesser D₁₀₄, D₁₀₆ der Innenumfangsflächen 104, 106 der Einsatzteile 56, 58 in Verbindung mit dem Durchmesser D₉₈ der Außenumfangsfläche 98 am Kolbenschaft 84 des Kolbens 18 realisiert. Genauer gesagt ist in Abhängigkeit von dem Durchmesser D₉₈ der mit dem Dichtelement 96 zusammenwirkenden Außenumfangsfläche 98 des Kolbenschafts 84 der Durchmesser D₁₀₆ der mit dem Dichtelement 102 zusammenwirkenden Innenumfangsfläche 106 im Einsatzteil 58 so viel größer gewählt als der Durchmesser D₁₀₄ der mit dem Dichtelement 100 zusammenwirkenden Innenumfangsfläche 104 im Einsatzteil 56, dass die durch die Innenumfangsfläche 104 begrenzte kreisförmige Querschnittsfläche des Druckraums 62 (= in Fig. 1 linke Wirkfläche 22 des Kolbens 18) der durch die Außenumfangsfläche 98 und die Innenumfangsfläche 106 begrenzten kreisringförmigen Querschnittsfläche des Druckraums 64 (= in Fig. 1 rechte Wirkfläche 24 des Kolbens 18) entspricht. Dies führt im Ergebnis dazu, dass die Volumenbilanz an der Kolben-Zylinder-Anordnung 16 stets ausgeglichen ist, d.h. wird für z.B. eine Verschiebung des Kolbens 18 nach rechts in Fig. 1 über den Druckanschluss 52 ein bestimmtes Hydraulikfluidvolumen in den Druckraum 62 hinein gefördert, so verdrängt der Kolben 18 das gleiche Hydraulikfluidvolumen über die Durchbrüche 80, den Ringraum 78 und den Druckanschluss 54 aus dem Druckraum 64, und umgekehrt.

Die Rastiereinrichtung 26 weist ein Gehäuse 114 auf, welches im dargestellten Ausführungsbeispiel auf geeignete Weise am Außenumfang des Einsatzteils 58 der Kolben-Zylinder-Anordnung 16 befestigt ist. In dem Gehäuse 114 ist eine Magnetspule 116 des Aktuators 32 aufgenommen, die das hier als Anker eines Magnetantriebs fungierende, ferromagnetische Sperrelement 28 zumindest teilweise konzentrisch umgibt. Das in der Magnetspule 116 kolbenartig verschiebbare Sperrelement 28 durchgreift im Gehäuse 114 bzw. im Einsatzteil 58, genauer dessen Mantelabschnitt 72 ausgebildete, miteinander ausgefluchtete Öffnungen 118, 120 (siehe Fig. 2), so dass ein am in Fig. 1 unteren Ende des Sperrelements 28 vorgesehener, sich zu seinem freien Ende im Querschnitt geringfügig verjüngender Rastiervorsprung 122 mit den Radialnuten 108, 110, 112 im Kolbenteil 82 in Eingriff gelangen kann. An seinem anderen, in Fig. 1 oberen Ende ist das Sperrelement 28 mit einer Aussparung 124 versehen, welche als Lager für die Schraubendruckfeder 30 dient, die vom Sperrelement 28 vorsteht und sich am Gehäuse 114 abstützt. Die Bestromung der Magnetspule 116 erfolgt schließlich über das in Fig. 1 punktiert eingezeichnete Versorgungskabel 34, das elektrisch an das Steuergerät ECU angeschlossen ist.

Insoweit ist ersichtlich, dass die Schraubendruckfeder 30 bestrebt ist, das Sperrelement 28 aus dem Gehäuse 114 der Rastiereinrichtung 26 herauszudrücken, so dass im unbestromten Zustand der Magnetspule 116 der Rastiervorsprung 122 aufgrund der Federkraft mit einer der Radialnuten 108, 110, 112 am Kolbenteil 82 in Eingriff gehalten wird. Durch den somit bewirkten Formschluss wird der Kolben 18 selbst bei Druckbeaufschlagung einer der Druckräume 62, 64 daran gehindert, sich in der Kolben-Zylinder-Anordnung 16 zu verschieben. Wird die Magnetspule 116 hingegen bestromt, so zieht die resultierende Magnetkraft das Sperrelement 28 entgegen der Kraft der Schraubendruckfeder 30 in das Gehäuse 114 in einer Richtung zurück, die im Wesentlichen senkrecht zur Verschieberichtung des Kolbens 18 verläuft, wobei der Rastiervorsprung 122 von der jeweiligen Radialnut 108, 110 bzw. 112 freikommt. Der Kolben 18 (und damit das mit dem Kolben 18 wirkverbundene Stellglied) kann nun durch Druckbeaufschlagung des entsprechenden Druckraums 62 bzw. 64 verschoben werden. Die jeweilige Stellung der Rastiereinrichtung 26 (offen bzw. rastiert), d.h. des Sperrelements 28 bezüglich des Gehäuses 114 der Rastiereinrichtung 26 kann vermittels des Steuergeräts ECU indirekt über die Induktivität des Aktuators 32 ermittelt werden, die sich bei einer Bewegung des Sperrelements 28 relativ zum Gehäuse 114 nach Maßgabe des aktuellen Luftspalts, also des lichten Abstands zwischen Sperrelement 28 und Gehäuse 114 im Bereich der Schraubendruckfeder 30 ändert.

Im dargestellten Ausführungsbeispiel sind drei Radialnuten 108, 110, 112 am Kolbenteil 82 vorgesehen, deren axiale Lage auf dem Kolben 18 und Abstand zueinander bestimmte Stellungen des mit dem Kolben 18 wirkverbundenen Stellglieds definieren. Befindet sich der Rastiervorsprung 122 wie in den Fig. 1 und 2 gezeigt mit der mittleren Radialnut 110 in Eingriff, so definiert dies beispielsweise eine Neutralstellung des Stellglieds - im Falle eines automatisierten Schaltgetriebes (ASG) z.B. eine Schaltmuffenstellung zwischen dem ersten und dem dritten Gang, wobei kein Gang eingelegt ist. Ist der Rastiervorsprung 122 hingegen mit der Radialnut 108 oder 112 verrastet, so definiert dies jeweils eine Endstellung des Stellglieds - im ASG-Falle beispielsweise eine Schaltmuffenstellung, bei der der erste bzw. der dritte Gang eingelegt ist.

Eine Besonderheit des Ausführungsbeispiels gemäß den Fig. 1 und 2 besteht hier noch darin, dass die Radialnuten 108, 110, 112 am Umfang des Kolbens 18 eine unterschiedliche Nuttiefe besitzen, wie insbesondere in Fig. 2 gut zu erkennen ist. Befindet sich der Rastiervorsprung 122 in Eingriff mit einer der Radialnuten 108, 110, 112, so wird das Sperrelement 28 in Abhängigkeit von der Tiefe der jeweiligen Radialnut mehr oder weniger weit aus dem Gehäuse 114 der Rastiereinrichtung 26 vorstehen, was unterschiedliche Luftspalte am Aktuator 32 bedingt. Somit kann durch Erfassung der Induktivität des Aktuators 32 über das Steuergerät ECU indirekt auch die axiale Lage des Kolbens 18 im durch (u.a.) die Einsatzteile 56, 58 gebildeten Zylindergehäuse ermittelt werden. Im Ergebnis kann eine (ggf. zusätzliche) Positionsinformation zur jeweiligen Stellung des Stellglieds gewonnen werden.

Mit der vorbeschriebenen hydraulischen Betätigungsvorrichtung 10 ist etwa folgender Betrieb möglich, wobei das Steuergerät ECU den elektrischen Pumpenantrieb M und den elektromagnetischen Aktuator 32 der Rastiereinrichtung 26 geeignet ansteuert und koordiniert.

Soll das Stellglied aus einer vorbestimmten Stellung, die bei diesem Ausführungsbeispiel wie oben beschrieben (indirekt) über die Induktivität des Aktuators 32 bekannt ist, beispielsweise der Mittenstellung gemäß den Fig. 1 und 2 verlagert werden, so wird über das Steuergerät ECU zunächst der Aktuator 32 der Rastiereinrichtung 26 bestromt. Infolgedessen wird das Sperrelement 28 entgegen der Kraft der Schraubendruckfeder 30 magnetisch zurückgezogen, wobei der Rastiervorsprung 122 von der jeweiligen, hier der mittleren Radialnut 110 am Kolben 18 freikommt, so dass die Rastierung gelöst ist. Nun wird über das Steuergerät ECU der Pumpenantrieb M derart bestromt, dass die Pumpe 14 mit derjenigen Pumprichtung R anläuft, die für die gewünschte Stellbewegungsrichtung benötigt wird, z.B. mit einer Pumprichtung R von rechts der Pumpe 14 nach links der Pumpe 14 in Fig. 1. Folglich kommt es zu einer hydraulischen Beaufschlagung des Druckraums 62 und damit einer Verschiebung des Kolbens 18 nach rechts in Fig. 1. Nach kurzem Verfahrweg des Kolbens 18 kann die Bestromung des Aktuators 32 abgestellt werden, so dass die Schraubendruckfeder 30 das Sperrelement 28 in Fig. 1 nach unten zu verschieben versucht. Dies gelingt sobald der Kolben 18 bezüglich des Sperrelements 28 eine Position erreicht hat, bei der der Rastiervorsprung 122 in die Radialnut 108 hineingleiten kann. Nun wird der Pumpenantrieb M ausgeschaltet, so dass das System wieder gänzlich stromlos ist.

Es ist ersichtlich, dass der Kolben 18 auf diese Art und Weise von einer Rastierstellung zur nächsten Rastierstellung verfahren werden kann. Soll das Stellglied von einer Endstellung direkt in die andere Endstellung bewegt werden, d.h. ohne Anfahren der Mitten- bzw. Neutralstellung, so kann der Aktuator 32 über ein längeres Zeitintervall bestromt werden, was bewirkt, dass die mittlere Radialnut 110 am Kolben 18 den zurückgezogenen Rastiervorsprung 122 "überfährt", ohne mit diesem zu verrasten, bevor der Rastiervorsprung 122 mit der Radialnut 108 bzw. 112 in der jeweiligen Endstellung zum Eingriff kommt.

Nachfolgend soll unter Bezugnahme auf die Fig. 3 eine Variante des vorbeschriebenen Ausführungsbeispiels nur insoweit erläutert werden als sie sich von Letzterem unterscheidet. Zur Vereinfachung der Darstellung wurde in Fig. 3 auf eine erneute Wiedergabe von Teilen des Getriebegehäuses 12 verzichtet.

Bei der Variante gemäß Fig. 3 besitzen die Radialnuten 108, 110, 112 am Umfang des Kolbens 18 keine unterschiedliche Nuttiefe, sind vielmehr gleich tief ausgebildet. Dafür weist die Kolben-Zylinder-Anordnung 16 eine Sensoreinrichtung 126 zur Erfassung der jeweiligen Position des Kolbens 18 in der Kolben-Zylinder-Anordnung 16 auf, mit einem am Zylindergehäuse, genauer am Außenumfang des Einsatzteils 58 der Kolben-Zylinder-Anordnung 16 angeordneten und dort geeignet angebrachten Sensor 128, z.B. einem an sich bekannten Hall-Sensor, und einem am Kolben 18 geeignet befestigten, im dargestellten Ausführungsbeispiel zwischen den Radialnuten 108 und 110 am Kolbenteil 82 angeordneten Signalelement 130, beispielsweise einem quaderförmigen Permanentmagneten. Über ein Signalkabel 132 ist der Sensor 128 an das Steuergerät ECU angeschlossen.

Auch bei diesem Ausführungsbeispiel steht der Rastiervorsprung 122 am Sperrelement 28 der Rastiereinrichtung 26 im unbestromten Zustand des Systems infolge der Kraft der Schraubendruckfeder 30 mit einer der Radialnuten 108, 110, 112 am Kolben 18 in Eingriff, um eine Verschiebung des Kolbens 18 zu verhindern. Wird der Aktuator 32 der Rastiereinrichtung 26 über das Steuergerät ECU bestromt, so zieht die Magnetspule 116 das Sperrelement 28 zurück, d.h. in Fig. 3 nach oben, was die Rastierung löst, d.h. der Rastiervorsprung 122 kommt von der jeweiligen Radialnut 108, 110 bzw. 112 frei. Nun steuert das Steuergerät ECU den Pumpenantrieb M an, worauf der druckbeaufschlagte Kolben 18 nach Maßgabe der vorgegebenen Pumprichtung R in der gewünschten Stellrichtung verfährt. Dabei wird über die Sensoreinrichtung 126, deren bezüglich der Kolben-Zylinder-Anordnung 16 ortsfeste Sensor 128 die jeweilige Relativposition des Signalelements 130 bezüglich des Sensors 128 erfasst, die jeweilige Stellung des Kolbens 18 ermittelt. Kurz vor der gewünschten Rastierstellung des Kolbens 18 beendet das Steuergerät ECU die Bestromung der Magnetspule 116, worauf das Sperrelement 28 aufgrund der Kraft der Schraubendruckfeder 30 bestrebt ist, nach vorne, d.h. in Fig. 3 nach unten zu verfahren. Sobald nun bei der weiteren Kolbenbewegung die entsprechende Radialnut 108, 110 bzw. 112 am Kolbenteil 82 mit dem Rastiervorsprung 122 des Sperrelements 28 ausgefluchtet ist, gleitet dieser in die Radialnut hinein, um den Kolben 18 in axialer Richtung festzuhalten. Schließlich schaltet das Steuergerät ECU den Pumpenantrieb M ab.

Der Fig. 4 ist ein weiteres Ausführungsbeispiel für eine hydraulische Betätigungsvorrichtung 10 zu entnehmen, bei der im Gegensatz zu den vorbeschriebenen Ausführungsbeispielen eine Mehrzahl von doppeltwirkenden Kolben-Zylinder-Anordnungen 16 (hier drei) vorgesehen ist, deren Kolben 18 mit jeweils einem Stellglied (nicht gezeigt) in Wirkverbindung stehen. Zur Vereinfachung der Darstellung wurde in Fig. 4 wiederum auf eine Wiedergabe von Teilen des Getriebegehäuses verzichtet, in dem die Kolben-Zylinder-Anordnungen 16 montiert sind, ebenso wie auf eine Darstellung von Sensoreinrichtungen zur Erfassung der jeweiligen Kolben- oder Stellgliedposition.

Gemäß Fig. 4 zweigen von den Druckleitungen 48, 50, die zu der in Fig. 4 oberen (ersten) Kolben-Zylinder-Anordnung 16 führen, Verbindungsleitungen 134, 136 ab, die mit den Druckanschlüssen 52, 54 der weiteren Kolben-Zylinder-Anordnungen 16 hydraulisch verbunden sind, um die Kolben-Zylinder-Anordnungen 16 sämtlich bezüglich der nur einen Pumpe 14 hydraulisch parallel zu schalten.

Es ist ersichtlich, dass ein bestimmtes Stellglied verfahren werden kann, indem das Steuergerät ECU durch Bestromung der Rastiereinrichtung 26 an der diesem Stellglied zugeordneten Kolben-Zylinder-Anordnung 16 die Kolbenrastierung aufhebt und die Pumpe 14 nach Maßgabe der gewünschten Stellrichtung mit bestimmter Pumprichtung R anschaltet, während die Kolben 18 der weiteren Kolben-Zylinder-Anordnungen 16 über die diesen funktional zugeordneten Rastiereinrichtungen 26 stromlos gehalten werden. Mit dieser Schaltung ist es auch möglich, mehrere Stellglieder zugleich in derselben Stellrichtung zu verfahren, indem die entsprechenden Rastiereinrichtungen 26 und der Pumpenantrieb M zur selben Zeit bestromt werden, worauf sich die druckbeaufschlagten freigegebenen Kolben 18 in derselben Stellrichtung bewegen.

Die Fig. 5, die ebenfalls die zu Fig. 4 angesprochenen Vereinfachungen aufweist, zeigt ein weiteres Beispiel einer hydraulischen Betätigungsvorrichtung 10, das sich von den vorbeschriebenen Ausführungsbeispielen im Wesentlichen dahingehend unterscheidet, dass die Rastiereinrichtung 26 nicht an der Kolben-Zylinder-Anordnung 16, sondern an dem eigentlichen Stellglied, hier eine eine Schaltgabel 90 tragende Schaltstange 88 angeordnet ist, was den Bauraumbedarf für die / an der Kolben-Zylinder-Anordnung 16 verringert. Hierbei ist die Schaltstange 88 an ihrem Außenumfang mit Radialnuten 138, 140, 142 versehen, die auf die vorbeschriebene Art und Weise mit dem Rastiervorsprung 122 am Sperrelement 28 der Rastiereinrichtung 26 zusammenwirken, um das Stellglied - und damit auch den Kolben 18 der Kolben-Zylinder-Anordnung 16 - wahlweise durch Verrastung bei stromloser Magnetspule 116 zu halten oder durch Aufheben der Verrastung bei Bestromung der Rastiereinrichtung 26 freizugeben.

Die Fig. 6 zeigt schließlich in gegenüber den vorherigen Figuren weiter schematisierter Darstellung noch ein weiteres Beispiel einer hydraulischen Betätigungsvorrichtung 10, die sich von den vorbeschriebenen Ausführungsbeispielen im Wesentlichen dahingehend unterscheidet, dass der Kolben 18 auf seinen hydraulisch beaufschlagbaren Seiten Wirkflächen 22, 24 unterschiedlicher Größe aufweist, die jeweils einen Druckraum 62, 64 der Kolben-Zylinder-Anordnung 16 begrenzen. Dabei wirkt nur ein Dichtelement 144 am Außenumfang des Kolbens 18 mit nur einer Zylinderlauffläche 146 der Kolben-Zylinder-Anordnung 16 zusammen, um die Druckräume 62, 64 hydraulisch voneinander zu trennen, was die Kolben-Zylinder-Anordnung 16 verglichen mit den vorbeschriebenen Ausführungsbeispielen erheblich verkürzt. Um bei einer Verschiebung des Kolbens 18 für einen Ausgleich der Volumendifferenz zwischen den Druckräumen 62, 64 zu sorgen, die sich aus der unterschiedlichen Größe der hydraulischen Wirkflächen 22, 24 bei gleichem Kolbenhub ergibt, ist zwischen der Pumpe 14 und der Kolben-Zylinder-Anordnung 16 eine mittels des Pumpendrucks hydraulisch ansteuerbare Ventilanordnung 148 vorgesehen.

Diese Ventilanordnung 148 umfasst im dargestellten Beispiel zwei druckgesteuerte, in Durchgangs-Null-Stellung federvorgespannte 2-2-Wegeventile 150, 152 sowie zwei Blenden 154, 156. Während das erste 2-2-Wegeventil 150 in eine Verbindungsleitung 158 zwischen den Druckleitungen 48, 50 geschaltet ist, sitzt das zweite 2-2-Wegeventil 152 von der Pumpe 14 kommend vor der Verbindungsleitung 158 in der Druckleitung 50. Die Blende 154 ist in der Druckleitung 48 von der Pumpe 14 kommend vor der Verbindungsleitung 158 angeordnet, während die Blende 156 zwischen dem Hydraulikanschluss 38 der Pumpe 14 und dem zweiten 2-2-Wegeventil 152 in die Druckleitung 50 geschaltet ist. Zwischen dem Hydraulikanschluss 36 der Pumpe 14 und der Blende 154 ist an die Druckleitung 48 eine Steuerleitung 160 angeschlossen, die zum zweiten 2-2-Wegeventil 152 in der Druckleitung 50 führt, so dass dieses mit dem in der Druckleitung 48 abgegriffenen Druck hydraulisch ansteuerbar ist. Gleichermaßen ist zwischen dem Hydraulikanschluss 38 der Pumpe 14 und der Blende 156 mit der Druckleitung 50 eine Steuerleitung 162 verbunden, die zum ersten 2-2-Wegeventil 150 in der Verbindungsleitung 158 führt, so dass dieses mit dem in der Druckleitung 50 abgegriffenen Druck hydraulisch ansteuerbar ist.

Anstelle des über die Steuerleitung 160 angesteuerten 2-2-Wegeventils 152 kann allerdings auch in gleicher Position ein in Richtung der Pumpe 14 sperrendes, ggf. mit der Blende 156 kombiniertes Rückschlagventil (nicht gezeigt) in der Druckleitung 50 angeordnet sein. Dann ist auch die Blende 154 in der Druckleitung 48 entbehrlich.

Die Funktionsweise dieser Schaltung ist wie folgt: Dreht die Pumpe 14 mit einer Pumprichtung R entgegengesetzt dem Uhrzeigersinn in Fig. 6, so entsteht aufgrund der Blende 154 in der Druckleitung 48 ein Staudruck, der über die Steuerleitung 160 an das 2-2-Wegeventil 152 weitergeleitet wird und dieses schließt. Das 2-2-Wegeventil 150 indes bleibt offen, so dass infolge der hydraulischen Verbindung über die Verbindungsleitung 158 beide Wirkflächen 22, 24 des Kolbens 18 gleichermaßen mit Druck beaufschlagt werden. Aufgrund der größeren Wirkfläche 22 auf der in Fig. 1 linken Seite des Kolbens 18 verschiebt sich der Kolben 18 in Fig. 1 nach rechts - vorausgesetzt natürlich, dass die Rastierung der Schaltstange 88 durch Bestromen der Rastiereinrichtung 26 aufgehoben ist. Das aus dem ringförmigen Druckraum 64 (rechts) verschobene Hydraulikfluidvolumen wird dabei zum Füllen des zylindrischen Druckraums 62 (links) verwendet; das noch fehlende Hydraulikfluidvolumen wird von der Pumpe 14 über das Rückschlagventil 46 aus dem Vorratsbehälter 20 nachgesaugt.

Wird der Pumpenantrieb M von dem Steuergerät ECU hingegen so angesteuert, dass die Pumpe 14 Hydraulikfluid mit einer Pumprichtung R im Uhrzeigersinn in Fig. 6 fördert, so entsteht aufgrund der Blende 156 ein Staudruck in der Druckleitung 50. Dieser Staudruck wird über die Steuerleitung 162 an das 2-2-Wegeventil 150 in der Verbindungsleitung 158 gemeldet und schließt dieses. Das 2-2-Wegeventil 152 in der Druckleitung 50 indes bleibt offen. Damit ist der ringförmige Druckraum 64 der Kolben-Zylinder-Anordnung 16 zum jetzigen Druckbereich (Hydraulikanschluss 38) der Pumpe 14 verbunden und vom jetzigen Saugbereich (Hydraulikanschluss 36) der Pumpe 14 abgetrennt. Der zylindrische Druckraum 62 der Kolben-Zylinder-Anordnung 16 hingegen ist zum jetzigen Saugbereich (Hydraulikanschluss 36) der Pumpe 14 verbunden. Aufgrund der am Kolben 18 wirkenden Druckdifferenz wird im Ergebnis der Kolben 18 in Fig. 6 nach links verschoben - vorausgesetzt natürlich, dass die Schaltstange 88 von der bestromten Rastiereinrichtung 26 freigegeben ist.

### BEZUGSZEICHENLISTE

- 10: hydraulische Betätigungsvorrichtung
- 12: Getriebegehäuse
- 14: Pumpe
- 16: Kolben-Zylinder-Anordnung
- 18: Kolben
- 20: Vorratsbehälter
- 22: Wirkfläche
- 24: Wirkfläche
- 26: Rastiereinrichtung
- 28: Sperrelement
- 30: Schraubendruckfeder
- 32: Aktuator
- 34: Versorgungskabel
- 36: Hydraulikanschluss
- 38: Hydraulikanschluss
- 40: Ansaugleitung
- 42: Ansaugleitung
- 44: Rückschlagventil
- 46: Rückschlagventil
- 48: Druckleitung
- 50: Druckleitung
- 52: Druckanschluss
- 54: Druckanschluss
- 56: Einsatzteil
- 58: Einsatzteil
- 60: Zylinderraum
- 62: Druckraum
- 64: Druckraum
- 66: Stufenbohrung
- 68: Stufenbohrung
- 70: O-Ring
- 72: Mantelabschnitt
- 74: Bodenabschnitt
- 76: Fortsatz
- 78: Ringraum
- 80: Durchbruch
- 82: Kolbenteil
- 84: Kolbenschaft
- 86: Stufenbohrung
- 88: Schaltstange
- 90: Schaltgabel
- 92: Gleitbuchse
- 94: Haltering
- 96: Dichtelement
- 98: Außenumfangsfläche
- 100: Dichtelement
- 102: Dichtelement
- 104: Innenumfangsfläche
- 106: Innenumfangsfläche
- 108: Radialnut
- 110: Radialnut
- 112: Radialnut
- 114: Gehäuse
- 116: Magnetspule
- 118: Öffnung
- 120: Öffnung
- 122: Rastiervorsprung
- 124: Aussparung
- 126: Sensoreinrichtung
- 128: Sensor
- 130: Signalelement
- 132: Signalkabel
- 134: Verbindungsleitung
- 136: Verbindungsleitung
- 138: Radialnut
- 140: Radialnut
- 142: Radialnut
- 144: Dichtelement
- 146: Zylinderlauffläche
- 148: Ventilanordnung
- 150: 2-2-Wegeventil
- 152: 2-2-Wegeventil
- 154: Blende
- 156: Blende
- 158: Verbindungsleitung
- 160: Steuerleitung
- 162: Steuerleitung

- D: Durchmesser
- ECU: Steuergerät
- M: elektrischer Pumpenantrieb
- R: Pumprichtung

## Patentansprüche

1. Kombination einer hydraulischen Betätigungsvorrichtung (10), eines Steuergeräts (ECU) und eines oder mehrerer, mittels der Betätigungsvorrichtung (10) betätigbarer Stellglieder (88, 90) für ein Kraftfahrzeuggetriebe, wobei die hydraulische Betätigungsvorrichtung (10) eine einen elektrischen Pumpenantrieb (M) aufweisende Pumpe (14), deren Pumprichtung (R) umkehrbar ist, wenigstens eine hydraulisch an die Pumpe (14) angeschlossene, doppeltwirkende Kolben-Zylinder-Anordnung (16), deren Kolben (18) eine erste Wirkfläche (22) auf der einen Seite und eine zweite Wirkfläche (24) auf der anderen Seite hat und mit dem Stellglied (88, 90) in Wirkverbindung steht, und einen Vorratsbehälter (20) für Hydraulikfluid umfasst, aus dem das Hydraulikfluid mittels der Pumpe (14) zur Kolben-Zylinder-Anordnung (16) förderbar ist, um deren Kolben (18) für eine Bewegung des Stellglieds (88, 90) je nach Pumprichtung (R) auf der ersten Wirkfläche (22) oder der zweiten Wirkfläche (24) hydraulisch zu beaufschlagen, wobei an der bzw. jeder Kolben-Zylinder-Anordnung (16) eine Rastiereinrichtung (26) angebracht ist, die ein mit Sperrabschnitten am Kolben (18) zusammenwirkendes Sperrelement (28) aufweist, das in eine eine Bewegung des Stellglieds (88, 90) verhindernde Sperrstellung federvorgespannt ist und welches mittels eines elektrisch ansteuerbaren Aktuators (32) von der Sperrstellung gegen die Federvorspannung in eine eine Bewegung des Stellglieds (88, 90) zulassende Lösestellung bewegbar ist, und wobei der Pumpenantrieb (M) und der Aktuator (32) mit dem Steuergerät (ECU) elektrisch verbunden sind, welches die elektrische Ansteuerung von Pumpenantrieb (M) und Aktuator (32) koordiniert.

2. Kombination nach Anspruch 1, wobei die Sperrabschnitte am Kolben (18) durch axial voneinander beabstandete Radialnuten (108, 110, 112) am Kolbenumfang ausgebildet sind.

3. Kombination nach Anspruch 1 oder 2, wobei der Kolben (18) auf seinen hydraulisch beaufschlagbaren Seiten mit Wirkflächen (22, 24) gleicher Größe versehen ist, die jeweils einen Druckraum (62, 64) der Kolben-Zylinder-Anordnung (16) begrenzen.

4. Kombination nach Anspruch 1 oder 2, wobei der Kolben (18) auf seinen hydraulisch beaufschlagbaren Seiten Wirkflächen (22, 24) unterschiedlicher Größe aufweist, die jeweils einen Druckraum (62, 64) der Kolben-Zylinder-Anordnung (16) begrenzen, wobei zwischen der Pumpe (14) und der Kolben-Zylinder-Anordnung (16) eine mittels des Pumpendrucks hydraulisch ansteuerbare Ventilanordnung (148) vorgesehen ist, die bei einer Verschiebung des Kolbens (18) für einen Ausgleich der Volumendifferenz zwischen den Druckräumen (62, 64) sorgt.

5. Kombination nach einem der vorhergehenden Ansprüche, wobei die Kolben-Zylinder-Anordnung (16) eine Sensoreinrichtung (126) zur Erfassung der Kolbenposition aufweist, mit einem am Zylindergehäuse angeordneten Sensor (128) und einem am Kolben (18) befestigten Signalelement (130).

6. Kombination nach einem der vorhergehenden Ansprüche, wobei es sich bei dem elektrisch ansteuerbaren Aktuator um einen elektromagnetischen Aktuator (32) handelt, und wobei mittels des Steuergeräts (ECU) die Induktivität des Aktuators (32) erfassbar ist, um die Stellung des Sperrelements (28) zu ermitteln.

7. Kombination nach wenigstens den Ansprüchen 2 und 6, wobei die Radialnuten (108, 110, 112) am Kolbenumfang eine unterschiedliche Nuttiefe besitzen, so dass durch Erfassung der Induktivität des elektromagnetischen Aktuators (32) über das Steuergerät (ECU) auch die axiale Lage des Kolbens (18) im Zylindergehäuse ermittelbar ist.

8. Kombination nach einem der vorhergehenden Ansprüche, wobei eine Mehrzahl von doppeltwirkenden Kolben-Zylinder-Anordnungen (16) vorgesehen ist, deren Kolben (18) mit jeweils einem Stellglied in Wirkverbindung stehen, und wobei die Kolben-Zylinder-Anordnungen (16) bezüglich der nur einen Pumpe (14) hydraulisch parallel geschaltet sind.

## Claims

1. Combination of a hydraulic actuating device (10), a control unit (ECU) and one or more setting elements (88, 90) for a motor vehicle transmission, which can be actuated by means of the actuating device (10), wherein the hydraulic actuating device (10) comprises a pump (14), which has an electric pump drive (M) and the pumping direction (R) of which is reversible, at least one double-acting piston-cylinder arrangement (16), which is hydraulically connected with the pump (14) and the piston (18) of which has a first effective surface (22) on one side and a second effective surface (24) on the other side and is operatively connected with the setting element (88, 90), and a reservoir (20) for hydraulic fluid, from which the hydraulic fluid can be conveyed by means of the pump (14) to the piston-cylinder arrangement (16) in order to hydraulically load the piston (18) for a movement of the setting element (88, 90) depending on the respective pumping direction (R) on the first effective surface (22) or the second effective surface (24), wherein a detent device (26) is mounted at the or each piston-cylinder arrangement (16), which comprises a blocking element (28) that co-operates with blocking sections at the piston (18), is spring-biased into a blocking position preventing movement of the setting element (88, 90) and which is movable by means of an electrically activatable actuator (32) against the spring bias from the blocking position to a release position permitting movement of the setting element (88, 90), and wherein the pump drive (M) and the actuator (32) are electrically connected with the control unit (ECU) which co-ordinates the electrical activation of pump drive (M) and actuator (32).

2. Combination according to claim 1, wherein the blocking sections at the piston (18) are formed by axially spaced-apart radial grooves (108, 110, 112) at the piston circumference.

3. Combination according to claim 1 or 2, wherein the piston (18) is provided on its hydraulically loadable sides with effective surfaces (22, 24) which are of the same size and which each bound a respective pressure chamber (62, 64) of the piston-cylinder arrangement (16).

4. Combination according to claim 1 or 2, wherein the piston (18) has on its hydraulically loadable sides effective surfaces (22, 24) which are of different size and which each bound a respective pressure chamber (62, 64) of the piston-cylinder arrangement (16), wherein provided between the pump (14) and the piston-cylinder arrangement (16) is a valve arrangement (148) which is hydraulically activatable by the pump pressure and which on displacement of the piston (18) ensures compensation for the volumetric difference between the pressure chambers (62, 64).

5. Combination according to any one of the preceding claims, wherein the piston-cylinder arrangement (16) comprises a sensor device (126) for detecting the piston position, the sensor device comprising a sensor (128) arranged at the cylinder housing and a signal element (130) attached to the piston (18).

6. Combination according to any one of the preceding claims, wherein the electrically activatable actuator is an electromagnetic actuator (32), and wherein the inductance of the actuator (32) is detectable by the control unit (ECU) in order to determine the position of the blocking element (28).

7. Combination according to at least claims 2 and 6, wherein the radial grooves (108, 110, 112) at the piston circumference have a different groove depth so that through detection of the inductance of the electromagnetic actuator (32) the axial position of the piston (18) in the cylinder housing is also determinable by way of the control unit (ECU).

8. Combination according to any one of the preceding claims, wherein a plurality of double-acting piston-cylinder arrangements (16) is provided, the pistons (18) of which are each operatively connected with a respective setting element, and wherein the piston-cylinder arrangements (16) are hydraulically connected in parallel with respect to the single pump (14).

## Revendications

1. Combinaison d'un dispositif d'actionnement hydraulique (10), d'un appareil de commande (ECU) et d'un ou de plusieurs organes de réglage (88, 90) pouvant être actionnés au moyen du dispositif d'actionnement (10), pour une transmission de véhicule automobile, le dispositif d'actionnement hydraulique (10) comportant une pompe (14) présentant un entraînement de pompe électrique (M), pompe dont la direction de pompage (R) peut être inversée, au moins un ensemble piston-cylindre (16) à double effet, qui est raccordé hydrauliquement à la pompe (14) et dont le piston (18) présente une première surface active (22) sur l'une des faces et une deuxième surface active (24) sur l'autre face et est en liaison fonctionnelle avec l'organe de réglage (88, 90), et un réservoir de stockage (20) pour un fluide hydraulique, duquel le fluide hydraulique peut être refoulé vers l'ensemble piston-cylindre (16) au moyen de la pompe (14), afin de solliciter hydrauliquement le piston (18) dudit ensemble pour déplacer l'organe de réglage (88, 90) en fonction de la direction de pompage (R) sur la première surface active (22) ou la deuxième surface active (24), un dispositif d'encliquetage (26) étant monté sur l'ensemble ou chaque ensemble piston-cylindre (16), lequel dispositif comprend un élément de blocage (28) coopérant avec des sections de blocage sur le piston (18), lequel élément de blocage est précontraint élastiquement dans une position de blocage empêchant un déplacement de l'organe de réglage (88, 90) et lequel peut être déplacé au moyen d'un actionneur (32) pouvant être commandé électriquement de la position de blocage, à l'encontre de la précontrainte élastique, dans une position de libération permettant un déplacement de l'organe de réglage (88, 90), et l'entraînement de pompe (M) et l'actionneur (32) étant reliés électriquement à l'appareil de commande (ECU), lequel coordonne la commande électrique de l'entraînement de pompe (M) et de l'actionneur (32).

2. Combinaison selon la revendication 1, les sections de blocage sur le piston (18) étant formées à la périphérie du piston par des rainures radiales (108, 110, 112) espacées axialement les unes des autres.

3. Combinaison selon la revendication 1 ou 2, le piston (18) étant pourvu sur ses faces pouvant être sollicitées hydrauliquement de surfaces actives (22, 24) de même dimension, qui délimitent chacune une chambre de pression (62, 64) de l'ensemble piston-cylindre (16).

4. Combinaison selon la revendication 1 ou 2, le piston (18) présentant sur ses faces pouvant être sollicitées hydrauliquement des surfaces actives (22, 24) de dimension différente, qui délimitent chacune une chambre de pression (62, 64) de l'ensemble piston-cylindre (16), un ensemble soupape (148) pouvant être commandé hydrauliquement au moyen de la pression de la pompe étant prévu entre la pompe (14) et l'ensemble piston-cylindre (16), lequel ensemble soupape assure une compensation de la différence de volume entre les chambres de pression (62, 64) lors d'un coulissement du piston (18).

5. Combinaison selon l'une quelconque des revendications précédentes, l'ensemble piston-cylindre (16) comprenant un dispositif de détection (126) destiné à détecter la position du piston et pourvu d'un capteur (128) agencé sur le boîtier du cylindre et d'un élément de signalisation (130) fixé au piston (18).

6. Combinaison selon l'une quelconque des revendications précédentes, l'actionneur pouvant être commandé électriquement étant un actionneur électromagnétique (32), et l'inductance de l'actionneur (32) pouvant être détectée au moyen de l'appareil de commande (ECU), afin de déterminer la position de l'élément de blocage (28).

7. Combinaison selon au moins l'une des revendications 2 et 6, les rainures radiales (108, 110, 112) possédant à la périphérie du piston une profondeur de rainure différente, de sorte que lorsque l'inductance de l'actionneur électromagnétique (32) est détectée par l'intermédiaire de l'appareil de commande (ECU), la position axiale du piston (18) dans le boîtier du cylindre peut également être déterminée.

8. Combinaison selon l'une quelconque des revendications précédentes, une pluralité d'ensembles piston-cylindre (16) à double effet étant prévus, dont les pistons (18) sont en liaison fonctionnelle avec respectivement un organe de réglage, et les ensembles piston-cylindre (16) étant montés hydrauliquement en parallèle par rapport à la seule pompe (14).
